# EUROPÄISCHE PATENTSCHRIFT

(11) **EP 3 578 365 B1**
(45) Veröffentlichungstag und Bekanntmachung des Hinweises auf die Patenterteilung: **16.07.2025**
(21) Anmeldenummer: 19178863.7
(22) Anmeldetag: 06.06.2019
(51) Int. Cl.: B33Y 50/02, B33Y 10/00, B33Y 30/00, B29C 64/106, B29C 64/393

(54) **VERFAHREN UND ANLAGE ZUM HERSTELLEN EINER DREIDIMENSIONALEN STRUKTUR**
METHOD AND SYSTEM FOR PRODUCING A THREE-DIMENSIONAL STRUCTURE
PROCÉDÉ ET INSTALLATION DE FABRICATION D'UNE STRUCTURE TRIDIMENSIONNELLE

(30) Priorität: 08.06.2018 DE 102018113775
(43) Veröffentlichungstag der Anmeldung: 11.12.2019
(73) Patentinhaber: Deutsches Zentrum für Luft- und Raumfahrt e.V., 51147 Köln (DE)
(72) Erfinder: KLETZ, Dr. Björn Timo, 38106 Braunschweig (DE); TITZE, Maik, 30419 Hannover (DE); RIEMENSCHNEIDER, Dr. Johannes, 38108 Braunschweig (DE)
(74) Vertreter: Gramm, Lins & Partner Patent- und Rechtsanwälte PartGmbB

(56) Entgegenhaltungen:
- EP-A1- 3 106 290
- WO-A1-2015/009938
- WO-A1-2016/088048
- US-A1- 2016 207 263

## Beschreibung

Die Erfindung betrifft ein Verfahren zum Herstellen einer dreidimensionalen Struktur aus einem 3D-druckfähigen Kunststoffmaterial mittels eines 3D-Druckkopfes. Die Erfindung betrifft ebenso eine Anlage zur Durchführung des Verfahrens hierzu.

Mit Hilfe von generativen Verfahren lassen sich unter Verwendung eines entsprechenden Werkstoffes Bauteile mit einer fast beliebigen Form herstellen. Der 3D-Druck mit Hilfe eines 3D-Druckers stellt dabei einen sehr bekannten Vertreter der generativen Fertigungsverfahren dar. Dabei wird mit Hilfe eines 3D-Druckers schichtweise ein schmelzbarer Werkstoff, beispielsweise ein thermoplastischer Kunststoff, gedruckt, wodurch sich am Ende des Verfahrens ein dreidimensionales Bauteil bzw. eine dreidimensionale Struktur ergibt.

Die Steifigkeit und Festigkeit eines auf dieser Basis hergestellten Bauteils hängt dabei signifikant von den entsprechenden Materialeigenschaften des verwendeten schmelzbaren Werkstoffes ab. Vor allem mit Blick auf den Leichtbau ist es dabei oftmals wünschenswert, dass die Bauteile aus Faserverbundwerkstoffen hergestellt werden, um eine hohe gebietsspezifische Festigkeit und Steifigkeit zu erlangen. Faserverbundwerkstoffe weisen anisotrope Werkstoffeigenschaften auf, sodass Festigkeit und Steifigkeit richtungsabhängig ist und somit abhängig ist von dem Faserverlauf.

Eine bedarfsweise Integration von Fasermaterial in den 3D-Druck hätte dabei den entscheidenden Vorteil, dass Bauteile und Strukturen hergestellt werden können, deren Lastpfade exakt an die Bedingungen angepasst sind, ohne dabei unnötiger Weise Material zu benötigen.

Aus der nachveröffentlichten DE 10 2017 124 3526 ist ein 3D-Druckkopf (einschließlich korrespondierender Anlage und Verfahren) bekannt, dem ein quasi endloses Fasermaterial zugeführt wird. Des Weiteren wird dem 3D-Druckkopf mit Hilfe dreier oder mehr Zuführkanäle Kunststoffmaterial zugeführt, wobei Fasermaterial und Kunststoffmaterial in einer gemeinsamen Mischkammer münden, wodurch das hindurchführende Fasermaterial von dem Kunststoffmaterial benetzt und in dieser Form ausgegeben wird. Hierdurch lassen sich nahezu beliebige Strukturen mit integrierten Lastpfaden entwickeln. Aus der nachveröffentlichten DE 10 2017 124 353 ist des Weiteren eine Anlage mit einem 3D-Druckkopf bekannt, wobei hier der Eingang der Materialzuführung zu dem 3D-Druckkopf luftdicht mit einer Druckquelle verschlossen wird, um so ein Austreten des thermischen Matrixmaterials am Eingang der Materialzuführung zu verhindern. Hierdurch wird aufsteigendes Kunststoffmaterial an einem Austritt oberhalb des 3D-Druckkopfes gehindert.

Bei der Erstellung komplexer Strukturen und Bauteile hat es sich jedoch als nachteilig herausgestellt, dass der aufgeschmolzene und aus dem 3D-Druckkopf extrudierte Kunststoff nur langsam abkühlt und entsprechend aushärtet, wodurch sich Schwierigkeiten bei der Herstellung freitragender Strukturen im Raum ergeben. So ist es beispielsweise mit den vorstehend beschriebenen 3D-Druckköpfen je nach Kunststoffmaterial nur selten möglich, im Raum frei nach oben zu drucken, da das extrudierte Kunststoffmaterial nicht schnell genug abkühlt und aushärtet, um so die nach oben zu druckende Struktur entsprechend zu stützen, es sei denn, die Geschwindigkeit des 3D-Druckkopfes wird entsprechend an diese Abkühlzeit angepasst, was einen extrem langsamen Druckvorgang bedeuten würde. Wird das Kunststoffmaterial jedoch nicht rechtzeitig abgekühlt und verfestigt, so würde die freitragende Struktur nicht tragen.

Aus der Praxis ist es daher bekannt, dass die Bauteile bzw. die herzustellende Struktur mit Hilfe von externen Kühlsystemen, beispielweise einem Gebläse, aktiv gekühlt werden, um so die Abkühlzeit zu verringern und insgesamt eine schnellere Druckphase zu erreichen. Es hat sich allerdings gezeigt, dass eine solche externe aktive Kühlung des Bauteils bzw. der herzustellenden Struktur nicht ausreicht, um prozesssicher und effizient eine freitragende Struktur in die Höhe zu drucken.

Aus der DE 10 2014 006 706 A1 ist ein Verfahren und eine Anlage zur Herstellung eines zweidimensionalen oder räumlichen Fachwerkes mit Stäben aus einem Verbundmaterial mit Fasern und Matrix bekannt, wobei das Fasermaterial und das Matrixmaterial gemischt und mit Hilfe einer Extrudereinheit ausgegeben werden. An der Austrittsöffnung ist ein Kühlrohr vorgesehen, wobei mittels eines Gebläses die Umgebungsluft durch das Kühlrohr und gezielt zu dem austretenden Kunststoffmaterial an der Austrittsöffnung der Extrudereinheit geführt wird.

Die EP 3 106 290 A1 betrifft ein 3D-Druckverfahren und eine 3D-Druckvorrichtung zum Auftragen eines insbesondere metallischen Werkstoffes auf eine Fläche. Ein dem Druckkopf vorgelagerter Bereich wird mit einem Heizelement lokal erwärmt. Der aufgetragene Werkstoff sowie optional die Fläche werden mit einem Kühlelement wieder abgekühlt. Das Heizelement und/oder das Kühlelement können in Bewegungsrichtung des Druckkopfes angeordnet und ausrichtbar sein. Die Gasmenge und -temperatur des Heiz- und des Kühlelementes sind durch eine Steuereinrichtung regelbar.

Die US 2016/0207263 A1 offenbart eine Vorrichtung zum schichtweisen 3D-Drucken mit einem Druckkopf sowie einer Heiz- und Kühleinrichtung. Um den Zusammenhalt zwischen zwei Modellschichten zu verbessern, wird ein Heizluftstrom auf den Druckbereich des Druckkopfes gerichtet, der dort die gerade erzeugte Modellschicht erwärmt. Für Überhänge werden Stützschichten aus einem Stützmaterial zwischen den Modellschichten eingefügt. Um solche Stützschichten später einfacher aus dem fertigen Bauteil entfernen zu können, wird bei einem Übergang von einer Stützschicht zu einer Modellschicht ein Kühlluftstrom auf den Druckbereich des Druckkopfes gerichtet, um den Zusammenhalt zwischen der Modellschicht und der Stützschicht zu verringern. Die Aktivierung von Kühlelementen der Kühleinrichtung kann durch eine Steuerung beispielsweise in Abhängigkeit der aktuellen oder geplanten Bewegungsrichtung des Druckkopfes gesteuert werden.

Der WO 2016/088048 A1 ist eine Kühleinrichtung für eine Düse eines 3D-Druckkopfes zu entnehmen. Durch die Düsenkühlung soll ein Materialfluss flüssigen Druckmaterials aus der Düse schneller und punktgenauer durch Erstarren beendet werden, um einen beschleunigten Wechsel zwischen unterschiedlichen Druckmaterialien ermöglichen zu können.

Allerdings hat sich gezeigt, dass gerade bei der Herstellung von endlosfaserverstärkten 3D-gedruckten Strukturen, bei denen das 3D-druckfähige Kunststoffmaterial aus einem quasi endlosen Fasermaterial und einer Matrix zusammengemischt wird, die Kühlung in den Bauteilrandbereichen einen wichtigen Einflussfaktor darstellen, um sicherzustellen, dass die Faser gerade auch im spitzen Winkel mit hoher Geschwindigkeit abgelegt werden kann. Andernfalls kann es nach dem Ablegen von Radien zu einem Verschleifen der Bauteilecken kommen, d.h. die Faser wird aus der Ecke herausgezogen, und zwar an den Stellen, an dem der Kunststoff noch nicht erstarrt ist.

Es ist demzufolge Aufgabe der vorliegenden Erfindung, ein verbessertes Verfahren und eine verbesserte Anlage anzugeben, bei denen insbesondere quasi endlosfaserverstärkte 3D-gedruckte Strukturen schneller und effizienter hergestellt werden können, ohne das aufgrund der Druckgeschwindigkeit Schäden an der herzustellenden Struktur entstehen.

Die Aufgabe wird mit dem Verfahren gemäß Anspruch 1 sowie der Anlage gemäß Anspruch 10 erfindungsgemäß gelöst.

Gemäß Anspruch 1 wird ein Verfahren zum Herstellen einer dreidimensionalen Struktur aus einem 3D-druckfähigen Kunststoffmaterial mittels eines 3D-Druckkopfes vorgeschlagen, wobei dem 3D-Druckkopf gattungsgemäß zunächst ein 3D-druckfähiges Kunststoffmaterial zugeführt und dann mittels des 3D-Druckkopfes aus einer Austrittsöffnung des 3D-Druckkopfes extrudiert wird. Das extrudiere Kunststoffmaterial wird dabei mittels einer Kühleinrichtung gekühlt, indem mindestens ein Fluidstrom auf das extrudierte Kunststoffmaterial geleitet wird.

Der 3D-Druckkopf kann dabei so ausgebildet sein, dass in ein 3D-druckfähiges Kunststoffmaterial mit und ohne Verstärkungsfasern zuführbar ist, wobei der 3D-Druckkopf ebenfalls eingerichtet sein kann, ein Fasermaterial und ein Matrixmaterial als 3D-druckfähiges Kunststoffmaterial separat zugeführt zu bekommen, wobei dann das Fasermaterial mit dem Matrixmaterial zu einem faserverstärkten Kunststoffmaterial innerhalb des 3D-Druckkopfes gemischt wird. Des Weiteren kann der 3D-Drucckopf sowie das Verfahren eingerichtet sein, mit Hilfe einer Heizeinrichtung das Kunststoffmaterial aufzuschmelzen, sodass es mit Hilfe des Extruders in zähflüssiger bzw. dickflüssiger Form extrudiert werden kann. Dabei ist es vorteilhaft, wenn dem 3D-Druckkopf insbesondere ein festes Material zugeführt wird, das dann mit Hilfe des 3D-Druckkopfes und einer entsprechenden Heizeinrichtung aufgeschmolzen wird.

Bei dem 3D-druckfähigen Kunststoffmaterial kann es sich insbesondere um einen thermoplastischen Kunststoff mit oder ohne Faserverstärkung handeln. Bei dem 3D-druckfähigen Kunststoffmaterial kann es sich demzufolge auch um ein quasi endlosfaserverstärkten Verbundmaterial handeln, bei dem ein Matrixmaterial, beispielsweise ein thermoplastisches Matrixmaterial oder ein duroplastisches Matrixmaterial, mit einem quasi endlosen Fasermaterial verbunden und so ausgegeben wird. Denkbar ist allerdings auch, dass das 3D-druckfähige Kunststoffmaterial ein Kunststoffmaterial ohne Faserverstärkung ist und somit kein quasi endloses Fasermaterial enthält. In jedem Falle kann das 3D-druckfähige Kunststoffmaterial ebenfalls ein thermoplastisches oder duroplastisches Kunststoffmaterial ohne Faserverstärkung sein. Letztlich handelt es sich bei dem 3D-druckfähigen Kunststoffmaterial um all jene Kunststoffmaterialien, die mit Hilfe eines 3D-Druckers und einem 3D-Druckkopf extrudiert werden können.

Weiterhin ist vorgesehen, dass die Kühlung des extrudierten Kunststoffmaterials mit Hilfe der Kühleinrichtung hinsichtlich der Kühlleistung und/oder der Kühlrichtung variiert wird, und zwar während des Druckvorganges.

Anders als bei der DE 10 2014 006 706 A1 variiert somit die Kühlung hinsichtlich der Kühlleistung und/oder Kühlrichtung, sodass das extrudierte Kunststoffmaterial gezielt an den entsprechenden Stellen gekühlt werden kann, wodurch sich beim Drucken der dreidimensionalen Struktur höhere Druckgeschwindigkeit ergeben und eine bessere Bauteilqualität hergestellt werden kann. Dabei kann die Variation der Kühlung, d.h. die Variation der Kühlleistung und/oder der Kühlrichtung, entsprechend Programmgesteuert anhand des Druckprogrammes erfolgen, sodass die Kühlleistung und/oder Kühlrichtung beim Drucken der dreidimensionalen Struktur entsprechend variiert und verändert wird, um so das gerade extrudierte Kunststoffmaterial genau an denjenigen Stellen mehr und besser zu kühlen bzw. an anderen Stellen weniger bis gar nicht zu kühlen, die für einen schnellen Druck und eine hohe Bauteilqualität verantwortlich sind. So können gezielt diejenigen Bereiche des extrudierten Kunststoffmaterials gezielt stark bzw. höher gekühlt werden (Steigerung der Kühlleistung in einer bestimmten Kühlrichtung), an denen ein schnelles und vorzeitiges Erstarren des Kunststoffmaterials für einen prozesssicheren Druck notwendig ist. Demgegenüber können jene Erstellen des extrudieren Kunststoffmaterials, die keine vorzeitige Erstarrung benötigen oder an denen eine vorzeitige Erstarrung kontraproduktiv ist, hinsichtlich der Kühlleistung dieser Kühlrichtung so gedrosselt werden, dass hier nur eine sehr geringe bis gar keine Kühlung erfolgt und somit ein vorzeitiges Erstarren des Kunststoffmaterials verhindert wird.

Die Erfinder haben dabei erkannt, dass durch eine Variation der Kühlleistung und/oder Kühlrichtung der Kühlung von extrudierten Kunststoffmaterialien, insbesondere in Kombination mit faserverstärkten 3D-druckfähigen Kunststoffmaterialien die Bauteilqualität der herzustellenden dreidimensionalen Struktur deutlich verbessern lässt, wobei darüber hinaus auch die Möglichkeit erreicht wird, freitragend in den Raum zu drucken, da nun durch eine entsprechende Variation der Kühlleistung und/oder Kühlrichtung das extrudierte Kunststoffmaterial gezielt an denjenigen Stellen gekühlt werden kann, die für die freitragende Struktur hinsichtlich eines schnellen Erstarrens wesentlich sind. Gerade in Verbindung mit faserverstärkten Kunststoffmaterialien lässt sich durch eine Variation der Kühlleistung und/oder Kühlrichtung beim Drucken des Kunststoffmaterials insbesondere eine Beschädigung der gedruckten Struktur durch noch nicht ausgehärteten Kunststoff verhindern.

In einer Ausführungsform ist vorgesehen, dass die Kühlung in Abhängigkeit von einer Druckposition des 3D-Druckkopfes, einer Bewegungsrichtung des 3D-Druckkopfes, einer Bewegungsgeschwindigkeit des 3D-Druckkopfes, einer Bewegungstrajektorie (Bahn) des 3D-Druckkopfes und/oder einer Strukturform bzw. Bauteilform der herzustellenden dreidimensionalen Struktur variiert wird. So ist es beispielsweise denkbar, dass bei einer Erhöhung der Bewegungsgeschwindigkeit des 3D-Druckkopfes die Kühlleistung erhöht wird, vorzugsweise signifikant erhöht wird, um das extrudierte Kunststoffmaterial insbesondere kurz nach dem Austritt aus der Austrittsöffnung des 3D-Druckkopfes schnell abzukühlen und somit den Erstarrungsprozess des Kunststoffes deutlich zu beschleunigen. Denkbar ist allerdings auch, dass je nach Bewegungsrichtung die Kühlrichtung verändert wird, sodass bei einer ersten Bewegungsrichtung das extrudierte Kunststoffmaterial aus einer ersten Kühlrichtung gekühlt wird, während in einer zweiten Bewegungsrichtung das extrudierte Kunststoffmaterial aus einer von der ersten Kühlrichtung verschiedenen zweiten Kühlrichtung gekühlt wird. Dabei ist es ebenfalls denkbar, dass die Kühlleistung in der ersten Kühlrichtung von der Kühlleistung der zweiten Kühlrichtung verschieden ist.

Es ist ebenfalls denkbar, dass in Abhängigkeit der Position des 3D-Druckkopfes insbesondere in Bezug auf die Position des herzustellenden Bauteils bzw. der herzustellenden Struktur die Kühlleistung und/oder Kühlrichtung variiert wird, sodass gezielt an den entsprechend vorgegebenen Positionen der Bauteilstruktur die gewünschte Kühlleistung und/oder Kühlrichtung eingestellt wird. Dies kann beispielsweise in den Programmdaten zur Ansteuerung des 3D-Druckkopfes enthalten sein, sodass durch die Rückkopplung der Position des 3D-Druckkopfes hinsichtlich der zu druckenden Struktur die an dieser Stelle vorgegebene Kühlleistung und/oder Kühlrichtung durch den 3D-Druckkopf eingestellt wird. In diesem Falle dient die Position des 3D-Druckkopfes als Rückmeldung für die aktuelle Druckposition innerhalb des Bauteils und die dabei gewünschte Kühlung.

Dabei kann auch in Abhängigkeit von der Strukturform der herzustellenden dreidimensionalen Struktur die Kühlung hinsichtlich der Kühlleistung und/oder Kühlrichtung variiert werden, mit dem gezielt an denjenigen Stellen, die für den Druckprozess kritisch sind, die Kühlleistung und/oder Kühlrichtung entsprechend eingestellt wird. Fährt der 3D-Druckkopf an die entsprechende Position innerhalb der dreidimensionalen zu druckenden Struktur, so wird entsprechend der Kühlvorgabe dann die Kühlleistung und/oder Kühlrichtung eingestellt.

In einer weiteren Ausführungsform ist vorgesehen, dass die Kühlleistung der Kühlung durch Temperieren des Fluidstromes, durch Verändern des Volumenstromes des Fluidstromes und/oder durch Verändern der Form des Fluidstromes des Kühlfluides variiert wird. So ist es denkbar, dass ein gasförmiges Fluid als Kühlfluid verwendet wird, das mit einer Fluidstromgeschwindigkeit auf das zu kühlende extrudierte Kunststoffmaterial geleitet wird, wobei das Kühlfluid zuvor unter die Umgebungstemperatur gekühlt wird. Damit hat das Kühlfluid eine niedrigere Temperatur als die Umgebungstemperatur, wodurch der Wärmeabtransport und die Kühlleistung erhöht werden kann. Dabei ist es denkbar, dass während des Druckprozesses die Temperierung des Kühlfluides entsprechend variiert wird, um so die Kühlleistung zu variieren.

Denkbar ist aber auch, dass der Volumenstrom zur Variation der Kühlleistung variiert wird, wobei der Volumenstrom hier das Volumen des Fluides pro Zeit meint. Durch eine Erhöhung des Volumenstromes, d.h. der Menge an Fluid pro Zeiteinheit, kann ebenfalls die Kühlleistung erhöht werden, da pro Zeitabschnitt grundsätzlich mehr Wärme aus dem extrudierten Kunststoffmaterial abtransportiert werden kann. Die Variation des Volumenstromes stellt dabei eine der einfachsten Möglichkeiten zur Variation der Kühlleistung dar. Denkbar ist selbstverständlich aber auch, dass durch sich verändern der Form des Volumenstromes die Kühlleistung variiert wird, in dem beispielsweise durch Anpassung einer Düse der Fluidstrom aufgefächert oder auf das extrudierte Kunststoffmaterial konzentriert wird.

In einer weiteren vorteilhaften Ausführungsform wird die Kühlrichtung durch Verändern des Winkels des Fluidstromes gegenüber dem extrudierte Kunststoffmaterial variiert, sodass das extrudierte Kunststoffmaterial aus verschiedenen Richtungen mit dem Fluidstrom angeströmt wird. Dabei kann die Kühlung des 3D-Druckkopfes so eingerichtet sein, dass das extrudierte Kunststoffmaterial zu einem ersten Zeitpunkt aus einer ersten Kühlrichtung angeströmt wird und zu einem auf den ersten Zeitpunkt folgenden zweiten Zeitpunkt aus einer zweiten Kühlrichtung angeströmt wird, die von der ersten Kühlrichtung verschieden ist, wodurch sich der Anströmwinkel verändert. Die Aufgabe der Erfindung wird außerdem dadurch gelöst, dass der 3D-Druckkopf so ausgebildet ist, dass die an dem 3D Druckkopf angeordnete Düse zum Ausgeben des Fluidstromes um das extrudierte Kunststoffmaterial herum bewegbar angeordnet ist, sodass die Kühlrichtung von der ersten Kühlrichtung hin zu der zweiten Kühlrichtung durch Bewegen der Düse verändert werden kann.

Dabei kann auch die Kühlleistung entsprechend angepasst werden, sodass in der ersten Kühlrichtung eine erste Kühlleistung vorgesehen ist, während in der zweiten Kühlrichtung eine zweite Kühlleistung vorgesehen ist. Demzufolge kann die Kühlleistung und die Kühlrichtung auch simultan variiert werden.

In einer weiteren Ausführungsform ist vorgesehen, dass bei mehr als einem Fluidstrom, der auf das extrudierte Kunststoffmaterial geleitet werden kann, die Kühlrichtung durch Einschalten oder Abschalten einer oder mehrerer der Fluidströme variiert werden kann, um so die Kühlrichtung zu variieren. Dies ist beispielsweise vorteilhaft, wenn der 3D-Drucker zwei oder mehr Fluiddüsen aufweist, die beispielsweise an dem 3D-Druckkopf starr angeordnet sind und ihren jeweiligen Fluidstrom aus einer vorgegebenen Kühlrichtung auf das extrudierte Kunststoffmaterial leiten. Zu einem ersten Zeitpunkt können dabei alle Fluidströme aller Düsen auf das extrudierte Kunststoffmaterial geleitet werden, während zu einem zweiten Zeitpunkt einer der Fluidströme oder mehrere der Fluidströme abgeschaltet sein können, sodass das extrudierte Kunststoffmaterial dann nur noch aus denjenigen Kühlrichtungen angeströmt wird, deren Fluidströme nicht abgeschaltet sind.

In einer weiteren Ausführungsform wird bei einer bogenförmigen Bewegungstrajektorie des 3D-Druckkopfes das extrudierte Kunststoffmaterial derart gekühlt, dass mindestens ein Fluidstrom in Richtung einer Innenseite der bogenförmigen Bewegungstrajektorie auf das extrudierte Kunststoffmaterial geleitet wird. Dabei ist es insbesondere vorteilhaft, wenn der mindestens eine in Richtung der Innenseite der bogenförmigen Bewegungstrajektorie auf das extrudierte Kunststoffmaterial geleitete Fluidstrom eine höhere Kühlleistung hat, als ein Fluidstrom, der auf eine der Innenseite gegenüberliegenden Außenseite der bogenförmigen Bewegungstrajektorie auf das extrudierte Kunststoffmaterial geleitet wird. Die Innenseite einer bogenförmigen Bewegungstrajektorie ist dabei diejenige Seite, die dem Mittelpunkt eines Radius der bogenförmigen Bewegungstrajektorie zugewandt ist. Die Außenseite ist demzufolge die im Mittelpunkt abgewandte Seite. Durch das entsprechende Kühlen der Innenseite der bogenförmigen Bewegungstrajektorie auf das extrudierte Kunststoffmaterial kann der Erstarrungsprozess deutlich beschleunigt werden, wodurch beim weiteren Drucken ein Herausreißen von Verstärkungsfasern, die in dem 3D druckfähigen Kunststoffmaterial enthalten sind, verhindert wird. Denn durch das weitere Drucken entsteht eine Zugkraft auf das quasi endlose Fasermaterial innerhalb des extrudierte Kunststoffmaterials, was gerade an den Bogeninnenseiten zu sogenannten Verschleifen führen kann. Durch ein gezieltes Kühlen dieser Bogeninnenseite der bogenförmigen Bewegungstrajektorie kann durch das schnelle Erstarren des Kunststoffmaterials ein Herausreißen der Verstärkungsfasern verhindert werden.

In einer weiteren vorteilhaften Ausführungsform wird das extrudierte Kunststoffmaterial mittels der Kühleinrichtung aus einer ersten Kühleinrichtung mit einem ersten Fluidstrom und aus einer der ersten Kühlrichtung gegenüberliegende zweite Kühlrichtung mit einem zweiten Fluidstrom gekühlt, sodass das extrudierte Kunststoffmaterial insgesamt von mindestens zwei Seiten gekühlt wird. Hierdurch kann ein sehr hoher Wärmeabtransport erreicht werden, der gerade beim freistehenden Drucken, insbesondere in die Höhe zur Strukturstabilität notwendig ist.

In einer weiteren Ausführungsform hierzu wird das extrudierte Kunststoffmaterial weiterhin aus einer dritten Kühlrichtung mit einem dritten Fluidstrom und aus einer dritten gegenüberliegenden vierten Kühlrichtung dann im vierten Fluidstrom gekühlt, wobei die dritte Kühlrichtung unter einem Winkel, vorzugsweise 90 ° zu der ersten Kühlrichtung verläuft. Damit wird das extrudierte Kunststoffmaterial von vier Seiten mit einem Fluidstrom gekühlt, sodass auch freischwebende Strukturen schnell und effizient gedruckt werden können.

In einer vorteilhaften Ausführungsform kann vorgesehen sein, dass die Fluidströme benachbarter Kühlrichtungen derart mittels der Kühleinrichtung eingestellt werden, dass aufgrund der Fluidströme auf das extrudierte Kunststoffmaterial eine Kraft mit einem Kraftvektor wirkt, deren Ursprung zwischen den beiden Kühlrichtungen der Fluidströme liegt. Hierdurch kann eine Anströmung je nach Steuerung erreicht werden, die so wirkt, als wäre eine Kühldüse zwischen den tatsächlich vorhandenen Kühldüsen vorhanden.

Die Aufgabe wird im Übrigen mit der Anlage gemäß Anspruch 10 zum Herstellen einer dreidimensionalen Struktur aus einem 3D-druckfähigen Kunststoffmaterial gelöst, wobei die Anlage einen 3D-Druckkopf hat, der dem über eine Zufuhreinrichtung ein 3D-fähiges Kunststoffmaterial zuführbar ist. Der 3D-Druckkopf weist des Weiteren eine extrudierte Einheit auf, die zum Extrudieren des dem 3D-Druckkopf zugeführten Kunststoffmaterials eine Austrittsöffnung ausgebildet ist. Außerdem weist der 3D-Druckkopf eine Kühleinrichtung auf, die zum Kühlen des extrudierten Kunststoffmaterials mittels mindestens eines auf das extrudierte Kunststoffmaterial geleiteten Fluidstromes ausgebildet ist. Erfindungsgemäß ist dabei vorgesehen, dass mit Hilfe einer Steuereinrichtung die Kühlung des extrudierten Kunststoffmaterials mittels des Fluidstromes hinsichtlich der Kühlleistung und/oder der Kühlleistung variiert wird. Die Steuereinrichtung ist dabei so ausgebildet, dass sie zu einem ersten Zeitpunkt eine erste Kühlleistung und/oder Kühlrichtung einstellt, während sie zu einem auf den ersten folgenden zweiten Zeitpunkt eine von der ersten Kühlleistung und/oder ersten Kühlrichtung verschiedene zweite Kühlleistung und/oder zweite Kühlrichtung einstellt.

Vorteilhafterweise weist der 3D-Druckkopf ein oder mehrere Kühldüsen auf, die zum Ausgeben des jeweiligen Fluidstromes auf das extrudierte Kunststoffmaterial in unmittelbarer Nähe zu der Austrittsöffnung des Extruders ausgebildet sind.

Erfindungsgemäß ist weiterhin vorgesehen, dass die Kühldüsen an dem 3D-Drücckopf bewegbar angeordnet sind, sodass die jeweilige Kühlrichtung variierbar ist. Hierbei ist es denkbar, dass die Düse auf einer Kreisbahn um das extrudierte Kunststoffmaterial herum bewegbar angeordnet ist, sodass so die Kühlrichtung während des Extrudierens des Kunststoffmaterials verändert und variiert werden kann.

Dabei ist es des Weiteren vorteilhaft, wenn sämtliche Düsen der Kühleinrichtung mit der der jeweilige Fluidstrom auch das extrudierte Kunststoffmaterial hergeleitet wird, an dem 3D-Druckkopf angeordnet sind, sodass bei jedweder Bewegung des 3D-Druckkopfes zur Positionierung des extrudierten Kunststoffmaterials sichergestellt ist, dass das extrudierte Kunststoffmaterial entsprechend gekühlt wird.

Die Erfindung wird anhand der beigefügten Figuren beispielhaft erläutert.

Es zeigen dort:
Figur 1 - schematische Darstellung eines 3D-Druckkopfes mit feststehenden Kühldüsen;
Figur 2 - schematische Darstellung eines 3D-Druckkopfes mit bewegbaren Kühldüsen;
Figur 3 Darstellung einer Kühlleistungsvarianz.

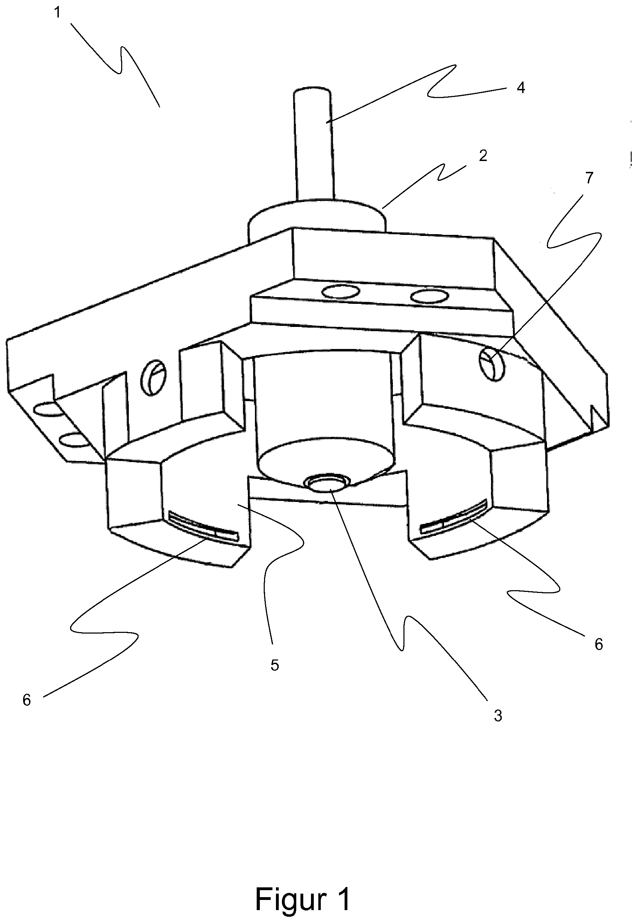

Figur 1 zeigt schematisch einen Teil eines 3D-Druckkopfes 1, der im Folgenden als 3D-Druckkopf bezeichnet wird. Der 3D-Druckkopf weist hierbei eine Extrudereinheit 2 auf, die zum extrudieren eines dem 3D-Druckkopf zugeführten 3D-Druckkopf 1 zugeführten 3D-druckfähigen Kunststoffmaterials an einer Austrittsöffnung 3 eingerichtet ist. In Figur 1 ist dabei schematisch dargestellt, dass dem 3D-Druckkopf 1 und der Extrudereinheit 2 ein 3D-druckfähiges Kunststoffmaterial 4 zuführbar ist.

Das Kunststoffmaterial 4 kann dabei beispielsweise eine Faserverstärkung in Form eines quasi endlosen Fasermaterials enthalten, das im Inneren des Kunststoffmaterials 4 vorgesehen ist. Dies kann sich dadurch ergeben, dass ein solches Material dem 3D-Druckkopf 1 entsprechend zugeführt wird. Denkbar ist aber auch, dass in einem in Figur 1 nicht gezeigtem Teil dem 3D-Druckkopf 1 sowohl das Kunststoffmaterial als auch das Fasermaterial getrennt zugeführt wird und dann in einer Mischkammer entsprechend gemischt wird, sowie dies beispielsweise aus der nachveröffentlichten DE 102017 124 352.6 bekannt ist.

Um die Austrittsöffnung 3 der Extrudereinheit 2 radial umlaufend herum ist eine Kühleinrichtung 5 vorgesehen, die insgesamt vier Kühldüsen 6 aufweist. Diese Kühldüsen sind dabei zentrisch um die Austrittsöffnung 3 angeordnet und dabei insbesondere so, dass immer zwei Kühldüsen 6 gegenüberliegend angeordnet sind und zwischen zwei benachbarten Kühldüsen ein Winkel von 90° aufgespannt wird. Die Kühldüsen 6 zeigen dabei von außen nach innen in Richtung der Austrittsöffnung 3, sodass das aus der Austrittsöffnung 3 extrudierte Kunststoffmaterial direkt von einem Fluid angeströmt und somit aktiv gekühlt wird.

Dabei können Anschlüsse 7 vorgesehen sein, damit der Kühleinrichtung 5 ein Kühlfluid zugeführt werden kann, das dann über die Kühldüsen 6 ausgegeben wird.

Dabei können die Kühldüsen 6 so ausgebildet sein, dass sie die Kühlleistung und/oder die Kühlrichtung variieren können, um so die Kühlung an die vorgegebenen Randbedingungen des Herstellungsprozesses anpassen zu können. So ist es denkbar, dass einige Kühldüsen 6 abgeschaltet werden, also das der Fluidstrom nur aus den noch angeschalteten Kühldüsen auf das extrudierte Kunststoffmaterial gerichtet wird. Denkbar ist aber auch, dass die Kühlleistung durch eine Erhöhung oder einer Verringerung des Volumenstroms entsprechend eingestellt wird.

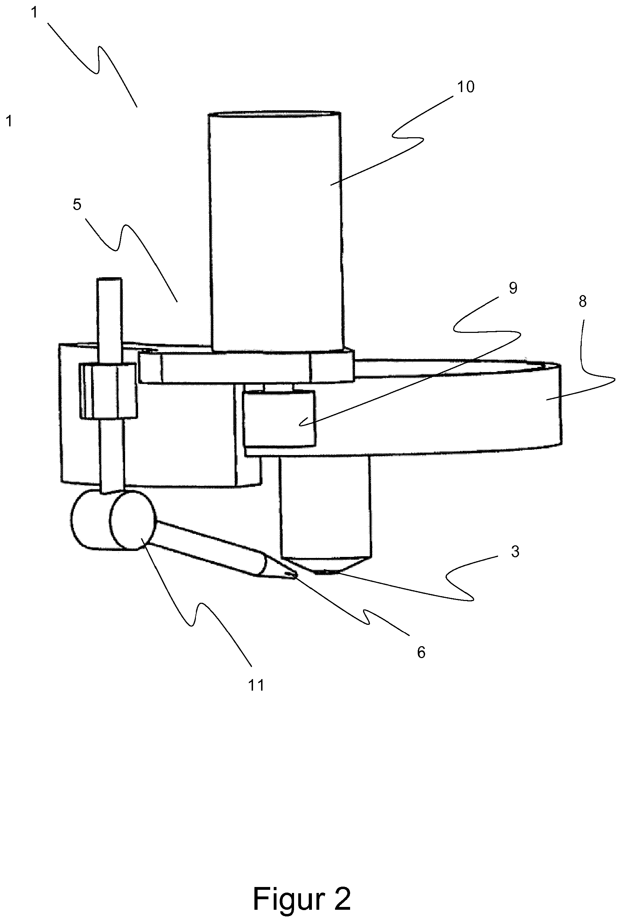

Figur 2 zeigt beispielhaft in schematischer Darstellung einen 3D-Druckkopf 1, bei dem die Düse 6 der Kühlvorrichtung 5 drehbar an dem Druckkopf 1 angeordnet ist. Hierfür weist der Druckkopf einen kreisförmigen Rahmen 8 auf, an den die Kühleinrichtung 5 bewegbar angeordnet ist. Über eine beispielhaft in Figur 2 gezeigten reibschlüssigen Verbindung 9 zwischen dem Motor 10 und dem kreisförmigen Rahmen 8 kann dabei die Kühldüse 6 zentrisch um die Austrittsöffnung 3, des Druckkopfes 1 herum bewegt werden.

Hierdurch wird es möglich, dass die Kühlrichtung, aus der der Fluidstrom auf das extrudierte Kunststoffmaterial zur Kühlung trifft.

Dabei kann es vorteilhaft vorgesehen sein, das die Kühldüse 6 über ein Gelenk 11 schwenkbar angeordnet ist, um so das extrudierte Kunststoffmaterial großflächiger zu kühlen bzw. um die Position der Kühlung zu variieren. Auch kann es vorgesehen sein, dass die Position der Düse relativ zur Austrittsöffnung des 3D-Druckkopfes translatorisch verschoben wird bzw. translatorisch verschiebbar ausgebildet ist.

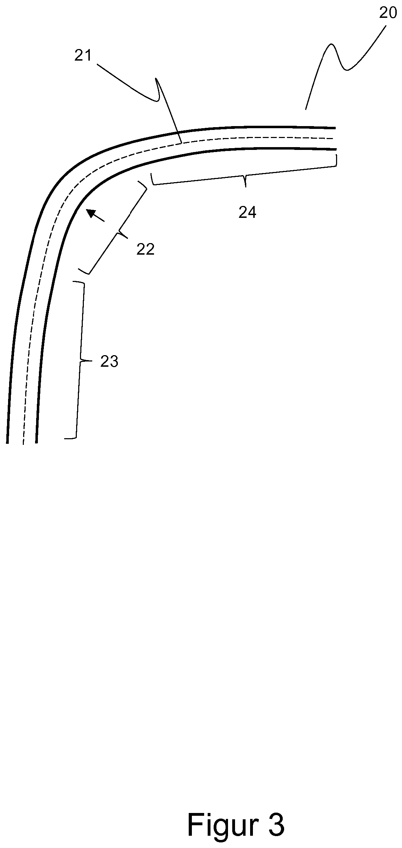

Figur 3 zeigt schließlich schematisch einen Abschnitt eines extrudierten Kunststoffmaterials 20, das entsprechend durch den Druckkopf abgelegt wurde. Das extrudierte Kunststoffmaterial 20 weist dabei im Inneren eine Faserverstärkung 21 in Form eines quasi endlosen Fasermaterials auf, das die Struktur entsprechend verstärken soll.

Das extrudierte Kunststoffmaterial 20 weist dabei einen ersten Abschnitt 22 auf, der an einer Innenseite des bogenförmig abgelegten extrudierten Kunststoffmaterials 20 und somit auch an einer Innenseite einer bogenförmigen Bewegungstrajektorie des 3D-Kopfes liegt. Vor dem ersten Abschnitt 22 befindet sich ein zweiter Abschnitt 23 sowie ein dritter Abschnitt 24, der sich an den ersten Abschnitt 22 anschließt. Beginnend von dem zweiten Abschnitt 23 über den ersten Abschnitt 22 zum dritten Abschnitt 24 wird dabei das extrudierte Kunststoffmaterial 20 gedruckt, wobei die Kühlleistung im ersten Abschnitt 22 aus Richtung der Innenseite (durch den Pfeil gekennzeichnet) höher ist, als in den beiden übrigen Abschnitten 23 und 24. Hierdurch soll erreicht werden, dass das Kunststoffmaterial im ersten Abschnitt 22 an der Innenseite der bogenförmigen Struktur schneller aushärtet, wodurch verhindert wird, dass das quasi endlose Fasermaterial 21 des extrudierte Kunststoffmaterial 20 beim weiterem Druck in Richtung der Innenseite herausgezogen wird.

### Bezugszeichenliste

1) 3D-Druckkopf
2) Extrudereinheit
3) Austrittsöffnung
4) Kunststoffmaterial
5) Kühleinrichtung
6) Kühldüsen
7) Anschlüsse der Kühleinrichtung
8) Kreisförmiger Rahmen
9) Reibschlüssige Verbindung
10) Motor
11) Gelenk
20) extrudiertes Kunststoffmaterial
21) Faserverstärkung
22) erster Abschnitt
23) zweiter Abschnitt
24) dritter Abschnitt

## Patentansprüche

1. Verfahren zum Herstellen einer dreidimensionalen Struktur aus einem 3D-druckfähigen Kunststoffmaterial (4) mittels eines 3D-Druckkopfes (1), wobei das Verfahren die folgenden Schritte umfasst:
- Zuführen des 3D-druckfähigen Kunststoffmaterials (4) zu dem 3D-Druckkopf (1) und
- Extrudieren des dem 3D-Druckkopf (1) zugeführten Kunststoffmaterials (4) aus einer Austrittsöffnung (3) des 3D-Druckkopfes (1),
- wobei das extrudierte Kunststoffmaterial (4) mittels einer Kühleinrichtung (5) gekühlt wird, indem mindestens ein Fluidstrom auf das extrudierte Kunststoffmaterial (4) geleitet wird, und
- wobei die Kühlung des extrudierten Kunststoffmaterials (4) hinsichtlich der Kühlleistung und/oder der Kühlrichtung mittels der Kühleinrichtung (5) variiert wird,
**dadurch gekennzeichnet, dass** eine an dem 3D-Druckkopf (1) bewegbar angeordnete Düse (6) zum Ausgeben des Fluidstroms um das extrudierte Kunststoffmaterial (4) herum bewegbar angeordnet ist, sodass die Kühlrichtung von einer ersten Kühlrichtung hin zu einer zweiten Kühlrichtung durch Bewegen der Düse (6) veränderbar ist.

2. Verfahren nach Anspruch 1, **dadurch gekennzeichnet, dass** die Kühlung in Abhängigkeit von einer Druckkopfposition des 3D-Druckkopfes (1), einer Bewegungsrichtung des 3D-Druckkopfes (1), einer Bewegungsgeschwindigkeit des 3D-Druckkopfes (1), einer Bewegungstrajektorie des 3D-Druckkopfes (1) und/oder einer Strukturform der herzustellenden dreidimensionalen Struktur variiert wird.

3. Verfahren nach Anspruch 1 oder 2, **dadurch gekennzeichnet, dass** die Kühlleistung der Kühlung durch Temperieren des Fluidstromes, durch Verändern des Volumenstromes des Fluidstromes und/oder durch Verändern der Form des Fluidstromes des Kühlfluides variiert wird.

4. Verfahren nach einem der vorhergehenden Ansprüche, **dadurch gekennzeichnet, dass** die Kühlrichtung durch Verändern des Winkels des Fluidstromes gegenüber dem extrudierten Kunststoffmaterial (4) variiert wird.

5. Verfahren nach einem der vorhergehenden Ansprüche, **dadurch gekennzeichnet, dass** bei mehr als einem Fluidstrom die Kühlrichtung durch Einschalten oder Abschalten der Fluidströme variiert wird.

6. Verfahren nach einem der vorhergehenden Ansprüche, **dadurch gekennzeichnet, dass** bei einer bogenförmigen Bewegungstrajektorie des 3D-Druckkopfes (1) das extrudierte Kunststoffmaterial (4) derart gekühlt wird, dass mindestens ein Fluidstrom in Richtung einer Innenseite der bogenförmigen Bewegungstrajektorie auf das extrudierte Kunststoffmaterial (4) geleitet wird.

7. Verfahren nach Anspruch einem der vorhergehenden Ansprüche, **dadurch gekennzeichnet, dass** das extrudierte Kunststoffmaterial (4) mittels der Kühleinrichtung (5) weiterhin aus einer dritten Kühlrichtung mit einem dritten Fluidstrom und aus einer der dritten Kühlrichtung gegenüberliegenden vierten Kühlrichtung mit einem vierten Fluidstrom gekühlt wird, wobei die dritte Kühlrichtung unter einem Winkel zu der ersten Kühlrichtung verläuft.

8. Verfahren nach Anspruch einem der vorhergehenden Ansprüche, **dadurch gekennzeichnet, dass** die Fluidströme benachbarter Kühlrichtungen derart mittels der Kühleinrichtung eingestellt werden, dass aufgrund der Fluidströme auf das extrudierte Kunststoffmaterial eine Kraft mit einem Kraftvektor wirkt, deren Ursprung zwischen den beiden Kühlrichtungen der Fluidströme liegt.

9. Verfahren nach einem der vorhergehenden Ansprüche, **dadurch gekennzeichnet, dass** das 3D-druckfähige Kunststoffmaterial (4) ein Verbundwerkstoff ist, der aus einem quasiendlosen Fasermaterial und einem Matrixmaterial gebildet wird.

10. Anlage zum Herstellen einer dreidimensionalen Struktur aus einem 3D-druckfähigen Kunststoffmaterial (4), mit einem 3D-Druckkopf (1), dem über eine Zuführeinrichtung ein 3D-druckfähiges Kunststoffmaterial (4) zuführbar ist, mit einer Extrudereinheit (2), die zum Extrudieren des dem 3D-Druckkopf (1) zugeführten Kunststoffmaterials (4) aus einer Austrittsöffnung (3) ausgebildet ist, und mit einer Kühleinrichtung (5), die zum Kühlen des extrudierten Kunststoffmaterials (4) mittels mindestens eines auf das extrudierte Kunststoffmaterial (4) geleiteten Fluidstromes ausgebildet ist, **dadurch gekennzeichnet, dass** die Anlage zur Durchführung des Verfahrens nach einem der vorhergehenden Ansprüche ausgebildet ist und hierzu eine oder mehrere der Kühldüsen (6) an dem 3D-Druckkopf (1) bewegbar angeordnet sind, sodass die jeweilige Kühlrichtung variierbar ist.

## Claims

1. A method of manufacturing a three-dimensional structure from a 3D printable plastic material (4) by means of a 3D print head (1), the method comprising the following steps:
- Feeding the 3D printable plastic material (4) to the 3D print head (1) and
- Extruding the plastic material (4) fed to the 3D print head (1) from an outlet opening (3) of the 3D print head (1),
- wherein the extruded plastic material (4) is cooled by means of a cooling device (5) by directing at least one fluid flow onto the extruded plastic material (4), and
- wherein the cooling of the extruded plastic material (4) is varied with respect to the cooling performance and/or the cooling direction by means of the cooling device (5),
**characterized in that** a nozzle (6) arranged movably on the 3D print head (1) for outputting the fluid flow is arranged movably around the extruded plastic material (4), so that the cooling direction can be changed from a first cooling direction to a second cooling direction by moving the nozzle (6).

2. Method according to claim 1, **characterized in that** the cooling is varied based on a print head position of the 3D print head (1), a direction of movement of the 3D print head (1), a speed of movement of the 3D print head (1), a movement trajectory of the 3D print head (1) and/or a structural shape of the three-dimensional structure to be produced.

3. Method according to claim 1 or 2, **characterized in that** the cooling performance of the cooling is varied by tempering the fluid flow, by changing the volume flow of the fluid flow and/or by changing the shape of the fluid flow of the cooling fluid.

4. Method according to one of the preceding claims, **characterized in that** the cooling direction is varied by changing the angle of the fluid flow relative to the extruded plastic material (4).

5. Method according to one of the preceding claims, **characterized in that** the cooling direction is varied for more than one fluid flow by switching the fluid flows on or off.

6. Method according to one of the preceding claims, **characterized in that**, during an arcuate movement trajectory of the 3D print head (1), the extruded plastic material (4) is cooled in such a way that at least one fluid flow is directed onto the extruded plastic material (4) in the direction of an inner side of the arcuate movement trajectory.

7. Method according to claim 1 of the preceding claims, **characterized in that** the extruded plastic material (4) is further cooled by means of the cooling device (5) from a third cooling direction with a third fluid flow and from a fourth cooling direction opposite the third cooling direction with a fourth fluid flow, the third cooling direction running at an angle to the first cooling direction.

8. Method according to claim one of the preceding claims, **characterized in that** the fluid flows of adjacent cooling directions are adjusted by means of the cooling device in such a way that, due to the fluid flows, a force with a force vector whose origin lies between the two cooling directions of the fluid flows acts on the extruded plastic material.

9. Method according to one of the preceding claims, **characterized in that** the 3D-printable plastic material (4) is a composite material formed from a quasi-endless fiber material and a matrix material.

10. Installation for producing a three-dimensional structure from a 3D-printable plastic material (4), having a 3D print head (1) to which a 3D-printable plastic material (4) can be fed via a feed device, having an extruder unit (2) which is designed to extrude the plastic material (4) fed to the 3D print head (1) from an outlet opening (3), and having a cooling device (5), which is designed to cool the extruded plastic material (4) by means of at least one fluid flow directed onto the extruded plastic material (4), **characterized in that** the system is designed to carry out the method according to one of the preceding claims and, for this purpose, one or more of the cooling nozzles (6) are arranged movably on the 3D print head (1), so that the respective cooling direction can be varied.

## Revendications

1. Procédé de fabrication d'une structure tridimensionnelle à partir d'une matière plastique apte à l'impression en 3D (4) au moyen d'une tête d'impression 3D (1), le procédé comprenant les étapes suivantes consistant à :
- amener la matière plastique apte à l'impression en 3D (4) à la tête d'impression 3D (1), et
- extruder la matière plastique (4) amenée à la tête d'impression 3D (1) à partir d'une ouverture de sortie (3) de la tête d'impression 3D (1),
- la matière plastique extrudée (4) étant refroidie au moyen d'un dispositif de refroidissement (5) par acheminement d'au moins un flux de fluide vers la matière plastique extrudée (4), et
- le refroidissement de la matière plastique extrudée (4) étant varié en termes de puissance de refroidissement et/ou de direction de refroidissement au moyen du dispositif de refroidissement (5),
**caractérisé en ce qu'**une buse (6) disposée de manière mobile sur la tête d'impression 3D (1) et destinée à distribuer le flux de fluide est disposée de manière mobile autour de la matière plastique extrudée (4), de sorte que la direction de refroidissement peut varier d'une première direction de refroidissement vers une deuxième direction de refroidissement par un déplacement de la buse (6).

2. Procédé selon la revendication 1,
**caractérisé en ce que** l'on fait varier le refroidissement en fonction d'une position de la tête d'impression 3D (1), d'une direction de déplacement de la tête d'impression 3D (1), d'une vitesse de déplacement de la tête d'impression 3D (1), d'une trajectoire de déplacement de la tête d'impression 3D (1) et/ou d'une forme structurelle de la structure tridimensionnelle à fabriquer.

3. Procédé selon la revendication 1 ou 2,
**caractérisé en ce que** l'on fait varier la puissance de refroidissement du dispositif de refroidissement en réglant la température du flux de fluide, en modifiant le débit volumique du flux de fluide et/ou en modifiant la forme du flux de fluide du fluide de refroidissement.

4. Procédé selon l'une des revendications précédentes,
**caractérisé en ce que** l'on fait varier la direction de refroidissement en modifiant l'angle du flux de fluide par rapport à la matière plastique extrudée (4).

5. Procédé selon l'une des revendications précédentes,
**caractérisé en ce que**, dans le cas de plus d'un flux de fluide, on fait varier la direction de refroidissement en mettant en circuit ou hors de circuit les flux de fluide.

6. Procédé selon l'une des revendications précédentes,
**caractérisé en ce que**, lorsque la trajectoire de déplacement de la tête d'impression 3D (1) est en forme d'arc, la matière plastique extrudée (4) est refroidie de telle sorte qu'au moins un flux de fluide est acheminé vers la matière plastique extrudée (4) dans la direction d'un côté intérieur de la trajectoire de déplacement en forme d'arc.

7. Procédé selon l'une des revendications précédentes,
**caractérisé en ce que** la matière plastique extrudée (4) est refroidie au moyen du dispositif de refroidissement (5) en outre à partir d'une troisième direction de refroidissement avec un troisième flux de fluide et à partir d'une quatrième direction de refroidissement, opposée à la troisième direction de refroidissement, avec un quatrième flux de fluide, la troisième direction de refroidissement s'étendant selon un angle par rapport à la première direction de refroidissement.

8. Procédé selon l'une des revendications précédentes,
**caractérisé en ce que** les flux de fluide de directions de refroidissement voisines sont réglés au moyen du dispositif de refroidissement de telle sorte qu'en raison des flux de fluide, une force avec un vecteur de force, dont l'origine se situe entre les deux directions de refroidissement des flux de fluide, agit sur la matière plastique extrudée.

9. Procédé selon l'une des revendications précédentes,
**caractérisé en ce que** la matière plastique apte à l'impression en 3D (4) est un matériau composite formé d'un matériau fibreux quasiment sans fin et d'un matériau matriciel.

10. Installation pour la fabrication d'une structure tridimensionnelle à partir d'une matière plastique (4) apte à l'impression en 3D, comprenant une tête d'impression 3D (1) à laquelle une matière plastique (4) apte à l'impression en 3D peut être amenée par l'intermédiaire d'un dispositif d'alimentation, comprenant une unité d'extrusion (2) conçue pour extruder la matière plastique (4) amenée à la tête d'impression 3D (1) à partir d'une ouverture de sortie (3), et comprenant un dispositif de refroidissement (5) conçu pour refroidir la matière plastique extrudée (4) au moyen d'au moins un flux de fluide acheminé vers la matière plastique extrudée (4),
**caractérisée en ce que** l'installation est conçue pour mettre en œuvre le procédé selon l'une des revendications précédentes, une ou plusieurs buses de refroidissement (6) étant disposées de manière mobile sur la tête d'impression 3D (1), de manière à permettre de varier la direction de refroidissement respective.
